# EUROPÄISCHE PATENTSCHRIFT

(11) **EP 2 923 073 B1**
(45) Veröffentlichungstag und Bekanntmachung des Hinweises auf die Patenterteilung: **02.11.2016**
(21) Anmeldenummer: 13788954.9
(22) Anmeldetag: 05.11.2013
(51) Int. Cl.: F02P 5/15, F02D 37/02, F02D 41/00, F02B 21/00, F02B 5/00, F02B 33/44, F02B 29/00, F02B 37/00, F02D 41/14, F02B 29/04, F02D 41/02

(54) **VERFAHREN ZUM BETRIEB EINER FREMDGEZÜNDETEN BRENNKRAFTMASCHINE MIT EINEM ABGASTURBOLADER**
METHOD OF OPERATING A SPARK-IGNITION ENGINE HAVING A TURBOCHARGER
PROCÉDÉ DE CONTROL D'UN MOTEUR À COMBUSTION À ALLUMAGE COMMANDÉ AYANT UN TURBOCOMPRESSEUR

(30) Priorität: 22.11.2012 DE 102012221403
(43) Veröffentlichungstag der Anmeldung: 30.09.2015
(73) Patentinhaber: Bayerische Motoren Werke Aktiengesellschaft, 80809 München (DE)
(72) Erfinder: DÖNITZ, Christian, 85716 Unterschleißheim (DE); VOSER, Christoph, CH-8050 Zürich (CH); ZSIGA, Norbert, CH-74074 Heilbronn (CH); ONDER, Christopher, CH-8484 Weisslingen (CH); GUZZELLA, Lino, CH-8610 Uster (CH)
(86) Internationale Anmeldenummer: PCT/EP2013/073066
(87) Internationale Veröffentlichungsnummer: WO 2014/079682

(56) Entgegenhaltungen:
- EP-A2- 2 385 230
- EP-B1- 1 856 388
- DE-A1-102004 055 574

## Beschreibung

Die Erfindung betrifft ein Verfahren zum Betrieb einer fremdgezündeten Brennkraftmaschine mit einem Abgasturbolader.

Zum technischen Umfeld wird beispielsweise auf die internationalen Patentanmeldungen WO 2009/036992 A1 und WO 2011/015336 A1 hingewiesen. Insbesondere aus der WO 2011/015336 A1 ist eine fremdgezündete Hubkolben-Brennkraftmaschine mit einer Brennkammer bekannt, mit einem darin beweglich angeordneten Kolben, der mechanisch mit einer Kurbelwelle wirkverbunden ist. Die Brennkammer weist ein Einlassventil und ein Auslassventil auf. Die Ventile sind über eine Nockenwelle derart mechanisch mit der Kurbelwelle wirkverbunden, dass sie pro zwei Hubzyklen des Kolbens je einmal geöffnet und geschlossen werden, d. h. es handelt sich um eine 4-Takt-Brennkraftmaschine. Weiter ist eine fluiddynamische Vorrichtung vorgesehen, die zur Erhöhung eines Druckes in einem Einlassvolumen vor der Brennkammer dient, welches mit der Brennkammer über das Einlassventil wirkverbunden ist. Darüber hinaus verfügt die Hubkolben-Brennkraftmaschine über eine Vorrichtung zur Kraftstoffeinspritzung sowie eine Drosselklappe, welche zur Beeinflussung des Druckes im Einlassvolumen dient. Darüber hinaus weist die Brennkammer ein zusätzliches Ladeventil auf, welches die Brennkammer mit einem Drucklufttank verbindet, wobei das Ladeventil über die Nockenwelle mit der Kurbelwelle wirkverbunden ist. Weiter ist ein Mechanismus vorhanden, der zur Unterbrechung der mechanischen Wirkverbindung zwischen dem Ladeventil und der Kurbelwelle dient, so dass das Ladeventil während mehrerer Hubzyklen des Kolbens geschlossen werden kann.

Nachteilig an dieser bekannten Hubkolben-Brennkraftmaschine sind die hohe Komplexität des resultierenden Gesamtsystems und sowie hohe resultierende Kosten.

Eine ähnliche Vorrichtung zur Überbrückung des Turbolochs einer Diesel-Brennkraftmaschine ist beispielsweise aus der europäischen Patentschrift EP 1 856 388 B1 bekannt. Im Gegensatz zur WO 2011/015336 A1 wird in dieser Offenlegungsschrift der Drucklufttank jedoch nicht über die brennkraftmaschineninterne Brennkammer mit Druckluft gefüllt, sondern über einen externen, von der Kurbelwelle angetriebenen Kompressor. Darüber hinaus erfolgt die Drucklufteinblasung nicht direkt in die Brennkammer der Hubkolben-Brennkraftmaschine, sondern in eine Einblasestelle im Saugrohr zwischen dem Abgasturbolader und der Brennkammer. Im Ausführungsbeispiel der EP 1 856 388 B1 ist somit eine turboaufgeladene Diesel-Brennkraftmaschine mit sechs Zylindern in Reihe offenbart, deren Saugleitungen an einer Sammelleitung angeschlossen sind, die einen Anschlussflansch aufweisen, woran ein Frischgasleitungsabschnitt mit seinem zweiten Endanschluss zum Ausströmen angeschlossen ist. Der erste Endanschluss zum Einströmen ist durch eine Leitung mit der Ausströmöffnung des Ladeluftkühlers gekoppelt, deren Einströmöffnung durch eine Leitung mit der Ausströmöffnung des Turbokompressors gekoppelt ist. An die Einströmöffnung des Turbokompressors ist ein Luftfilter mit einer Leitung angeschlossen. Der Turbokompressor bildet einen Teil des Abgasturboladers, dessen Abgasturbine mit seiner Einströmöffnung an die Ausströmöffnung des Auspuffsammelrohrs angeschlossen ist. Der Turbokompressor und die Abgasturbine sind an einer gemeinsamen Welle befestigt. Die Brennkammern sind durch Auspuffleitungen an das Auspuffsammelrohr angeschlossen. Die Ausströmöffnung der Abgasturbine ist mit dem Abgasrohr zusammengekoppelt. Die Kraftstoffversorgung der Zylinder erfolgt durch Einspritzdüsen, deren Regelung durch eine elektronische Steuereinheit durchgeführt wird. An einen Anschluss der elektronischen Steuereinheit ist der Anschluss eines Gaspedals angeschlossen. Ein weiterer elektrischer Anschluss der Steuereinheit ist mit dem elektrischen Anschluss des Frischgasleitungsabschnitts zusammengekoppelt. Der Frischgasleitungsabschnitt besitzt einen Druckluftanschluss, der an den Auslassanschluss des Druckluftbehälters angeschlossen ist. Der Speiseanschluss des Druckluftbehälters ist durch die Leitung an den Druckluftanschluss des Druckluftkompressors angeschlossen. In die Leitung sind ein Druckregler und ein Lufttrockner eingebaut. Der Druckluftkompressor besitzt einen Saugstutzen, der mit einem Luftfilter versehen ist. Die Welle des Druckluftkompressors ist durch einen Riementrieb mit der Kurbelwelle der turboaufgeladenen Diesel-Brennkraftmaschine verbunden.

Um das Beschleunigungsemissionsverhalten zu verbessern, wird in dem Patent EP 1 856 388 B1 folgendes Verfahren vorgeschlagen:
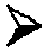 Ermitteln des Drehmomentanforderungssignals und Zuführen der Daten an die elektronische Steuereinheit,
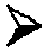 Ermitteln der motorischen Kennwerte und Zuführen der Werte an die elektronische Steuereinheit,
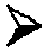 Ermitteln der Stellung der Drosselklappe und Zuführen der Werte an die elektronische Steuereinheit,
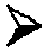 Ermitteln des Luftdrucks im Innenraum des Frischgasleitungsabschnitts zwischen dem ersten Endanschluss und der Drosselklappe bzw. des zweiten Endanschlussesund der Drosselklappe und Zuführen der Druckwerte an die elektronische Steuereinheit,
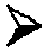 Ermitteln des Luftdrucks im Innenraum der Saugleitung zwischen Zylindereinlassventil und Drosselklappe und Zuführen des Druckwertes an die elektronische Steuereinheit, sowie Ermitteln des Luftdrucks im Innenraum der Saugleitung zwischen Drosselklappe und Turbokompressor und Zuführen des Druckwertes an die elektronische Steuereinheit,
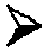 Verarbeiten der obigen Daten und Messwerte in der elektronischen Steuereinheit zur Herstellung von Betätigungsausgangssignalen zum Öffnen/Schließen des Druckluftventils der zeitweiligen Einblasung in die Saugleitung und
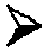 gleichzeitiges Betätigen der Drosselklappe bei Beginn der Einblasung in Richtung "Schließen" und bei Ende der Einblasung in Richtung "Öffnen".

Dieser Stand der Technik weist den Nachteil auf, dass das Betriebsverfahren für eine selbstzündende Brennkraftmaschine optimiert ist.

Der vorliegenden Erfindung liegt die Aufgabe zugrunde, ein Verfahren zum Betrieb einer fremdgezündeten Brennkraftmaschine mit einem Abgasturbolader aufzuzeigen, bei gleichzeitiger Minimierung der Reaktionszeit auf einen Drehmomentsollwertsprung der Brennkraftmaschine bei minimalem Druckluftverbrauch.

Diese Aufgabe wird durch die Verfahrensschritte im kennzeichnenden Teil des Patentanspruchs 1 gelöst.

Durch das erfindungsgemäße Verfahren wird die Reaktionszeit auf einen Drehmomentsollwertsprung der Brennkraftmaschine deutlich minimiert, bei minimalem Druckluftverbrauch und es wird verhindert, dass z. B. unverbrannte Kohlenwasserstoffe emittiert werden. Durch den Einsatz eines 3-Wege Katalysators können die Emissionen der Brennkraftmaschine minimiert werden. Unter nahe-stöchiometrisches Kraftstoff-/Luftverhältnis wird ein Kraftstoff-/Luftverhältnis im Bereich von ca. 0,97 bis 1,03 verstanden, was im praktischen Betrieb als stöchiometrisch betrachtet wird.

Um dieses Ziel zu erreichen, wird folgendes erfindungsgemäße Verfahren zum Betrieb einer fremdgezündeten Brennkraftmaschine mit einem Abgasturbolader mit den Merkmalen aus dem Oberbegriff des Patentanspruchs 1 vorgeschlagen:
- Erhöhung der Drehmomentanforderung an die Brennkraftmaschine,
- Öffnen des Lufteinblaseventils und ständiges Messen des ersten und des zweiten Gasdrucks p₁, p₂ durch die Steuereinheit,
- Schließen der Drosselklappe durch die Steuereinheit frühestens mit Öffnen des Lufteinblaseventils oder sobald der zweite Druck p₂ den ersten Druck p₁ übersteigt,
- Berechnen eines ersten Gas-Massenstroms, der in die Brennkraftmaschine gefördert wird und Berechnen eines zweiten Gas-Massenstroms, der dem gewünschten Drehmoment entspricht durch die Steuereinheit,
- Sobald der erste Gas-Massenstrom größer ist als der zweite Gas-Massenstrom, Verschieben eines Zündwinkels nach spät,
- Sobald der erste Gas-Massenstrom multipliziert mit einem Faktor e_{zw,min} dem zweiten Gas-Massenstrom gleicht, langsames Schließen des Lufteinblaseventils,
- Sobald der Abgasturbolader eine definierte Drehzahl erreicht, vollständiges Schließen des Lufteinblaseventils,
- Sobald der erste Gasdruck p₁ dem zweiten Gasdruck p₂ gleicht, Öffnen der Drosselklappe durch die Steuereinheit,
- Ständiges Steuern oder Regeln des Kraftstoffsystems (19) durch die Steuereinheit (13) derart, dass ständig ein nahe-stöchiometrisches Kraftstoff-/Luftverhältnis der Brennkraftmaschine (1) für eine Verbrennung zur Verfügung steht,
- Konventionelles Betreiben der Brennkraftmaschine.

Vorteilhafte Weiterbildungen des erfindungsgemäßen Verfahrens sind in den Unteransprüchen beschrieben.

Sofern in dem Frischlufttrakt für den Verdichter ein mit einem Überströmventil verschließbarer Verdichterbypass zur Umgehung des Verdichters vorgesehen ist, wird folgender weiterer Verfahrensschritt gemäß Patentanspruch 2 vorgeschlagen:
- Sobald der Verdichter eine Pumpgrenze erreicht, Öffnen des Überströmventiles durch die Steuereinheit.

Eine nochmalige Weiterbildung dieses Verfahrens erfolgt durch folgenden Verfahrensschritt gemäß Patentanspruch 3:
- Regelung oder Steuerung des Überströmventiles durch die Steuereinheit derart, dass der Verdichter die Pumpgrenze nicht überschreitet.

Durch die zwei letztgenannten Verfahrensschritte wird verhindert, dass der Verdichter seine Pumpgrenze überschreitet und dadurch, aufgrund der Druckverhältnisse in den Pumpbereich kommt.

Im Folgenden ist die Erfindung anhand von zwei Figuren näher erläutert.
- Fig. 1: zeigt schematisch einen Aufbau einer erfindungsgemäßen Hubkolben-Brennkraftmaschine zur Durchführung des erfindungsgemäßen Verfahrens.
- Fig. 2a: zeigt in einem ersten Diagramm Soll- und Istwerte eines Mitteldrucks der Hubkolben-Brennkraftmaschine bei einem Drehmomentsollwertsprung.
- Fig. 2b: zeigt in einem zweiten Diagramm einen Ladedruck, einen Saugrohrdruck und eine skalierte Abgasturboladerdrehzahl bei dem Drehmomentsollwertsprung.
- Fig. 2c: zeigt in einem dritten Diagramm Massenströme durch ein Lufteinblaseventil, durch eine Drosselklappe in die HubkolbenBrennkraftmaschine.
- Fig. 2d: zeigt in einem vierten Diagramm Aktuatorsignale der Drosselklappe, des Lufteinblaseventils und eines Zündwinkelverzugs.

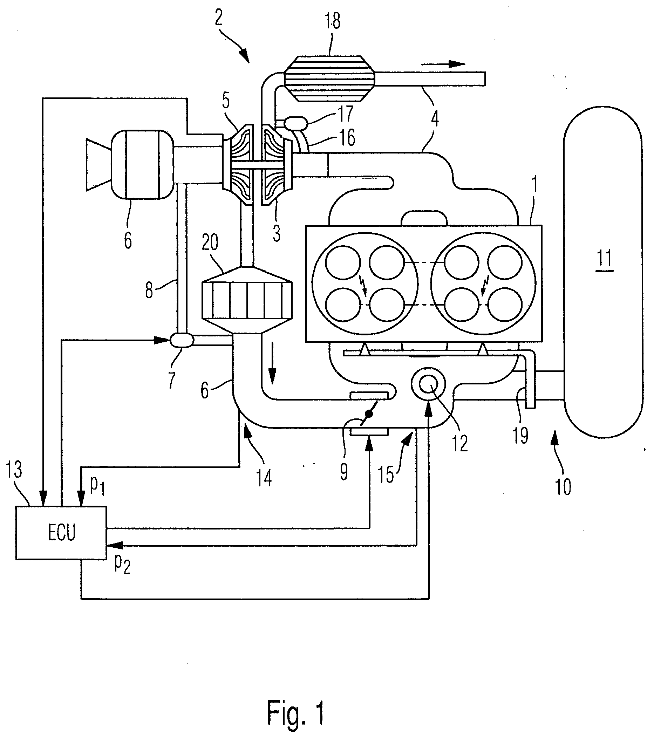

Fig. 1 zeigt schematisch einen Aufbau einer erfindungsgemäßen Hubkolben-Brennkraftmaschine 1 zur Durchführung des erfindungsgemäßen Verfahrens. Die Brennkraftmaschine 1 weist im vorliegenden Ausführungsbeispiel zwei Zylinder auf, schematisch durch zwei große, nicht bezifferte Kreise dargestellt. Innerhalb der Kreise befinden sich vier kleinere, ebenfalls nicht bezifferte Kreise, stellvertretend für zwei Gaswechseleinlassventile und zwei Gaswechselauslassventile. Für jeden Zylinder ist zwischen den Gaswechselventilen symbolhaft durch einen Blitz eine Zündeinrichtung dargestellt.

Über eine mit 13 bezifferte elektronische Steuereinheit ist eine Zündwinkelverstellung nach früh oder spät bezüglich einer Kurbelwinkelstellung möglich. Zum Betrieb der Brennkraftmaschine ist weiter ein Kraftstoffsystem 19 vorgesehen. Für jeden Zylinder ist schematisch ein nicht bezifferter Kraftstoffinjektor, durch ein Dreieck dargestellt, vorgesehen.

Zur Versorgung der Brennkraftmaschine 1 mit einer Frischluft ist ein Frischlufttrakt 6 und zur Abfuhr von Abgasen ist ein Abgastrakt 4 vorgesehen. Im Abgastrakt 4 und Frischlufttrakt 6 ist ein Abgasturbolader 2 angeordnet. Eine Turbine 3 des Abgasturboladers 2 ist im Abgasstrang 4 und ein Verdichter 5 des Abgasturboladers 2 ist in dem Frischlufttrakt 6 angeordnet. Weiter befindet sich im Abgasstrang 4 in Strömungsrichtung des Abgases, dargestellt durch einen Pfeil, hinter der Turbine 3 eine Abgasreinigungsanlage 18, beispielsweise ein Katalysator oder ein Partikelfilter. Zur Umgehung der Turbine 3 mit dem Abgas ist weiter ein Turbinenbypass 16 vorgesehen, mit einem in dem Turbinenbypass 16 angeordneten dritten Verschlusselement 17, beispielsweise eine Abgasklappe. In einem weiteren Ausführungsbeispiel kann der Turbinenbypass 16 auch entfallen.

Frischluftseitig durchströmt die Frischluft im Frischlufttrakt 6 zuerst einen nicht separat bezifferten Ansauggeräuschdämpfer, weiter den Verdichter 5 und weiter durch einen Ladeluftkühler 20. In Strömungsrichtung der Frischluft ist nach dem Ladeluftkühler 20 eine Drosselklappe 9 zur Regulierung der Frischluftmenge, die in die Brennkraftmaschine zur Verbrennung strömt, vorgesehen. Nach der Drosselklappe 9 strömt die Frischluft in einen nicht bezifferten Ansaugkrümmer und weiter durch die Gaswechseleinlassventile in die Zylinder. Weiter ist für den Verdichter 5, zur Umgehung der Frischluft des Verdichters 5, ein Verdichterbypass 8 vorgesehen mit einem Überströmventil 7. In einem anderen Ausführungsbeispiel kann der Verdichterbypass 8 auch entfallen.

Um beispielsweise ein sog. "Turboloch" wirkungsvoll zu überbrücken ist eine Drucklufteinblasevorrichtung 10 vorgesehen, die im wesentlichen aus einem Drucktank 11, einem Lufteinblaseventil 12, das gasführend mit dem Drucktank 11 in Wirkverbindung steht, besteht.

Das Lufteinblaseventil 12 ist über die elektronische Steuereinheit 13, beispielsweise einem Motorsteuergerät, ansteuerbar, so dass das Lufteinblaseventil 12 bedarfsgerecht geöffnet und geschlossen werden kann. Auch das Überströmventil 7 ist von der Steuereinheit 13 zum Öffnen und Schließen des Verdichterbypasses 7 ansteuerbar. Weiter ist auch die Drosselklappe 9 von der Steuereinheit 13 zum Öffnen oder zum Schließen gesteuert oder geregelt ansteuerbar. Zur Durchführung des erfindungsgemäßen Verfahrens ist ferner eine Druckmessstelle zwischen Verdichter 5 und Drosselklappe 9 vorgesehen und weiter eine zweite Druckmessstelle zwischen Drosselklappe 9 und Brennkraftmaschine 1. Der erste Druck ist mit p₁ beziffert, der zweite Druck mit p₂. Beide Drucksignale werden in der Steuereinheit 13 verarbeitet.

Auch wenn heute fast alle Parameter einer Brennkraftmaschine 1 in der Steuereinheit 13 modelliert oder als Kennfelder abgelegt sein können, können in weiteren Ausführungsbeispiel weitere Sensoren vorgesehen werden zur Messung beispielsweise von:
∘ Gasdruck vor dem Verdichter 5,
o Gasdruck nach dem Verdichter 5 p₁,
o Gasdruck im Saugrohr (i.e. nach Drosselklappe 9), p₂,
o Gasdruck im Drucktank 11,
o Gasdruck vor der Turbine 3,
o Gasdruck nach der Turbine 3,
o Drehzahl der Brennkraftmaschine 1
o Drehzahl des Abgasturboladers 2.

Der Luftmassenbedarf für die Turbolochüberbrückung ist stark von der verwendeten Regelstrategie für die Betätigung der Drosselklappe 9, des Lufteinblaseventils 12, des Überströmventils 7 und dem Zündzeitpunkt abhängig. Das Ziel der erfindungsgemäßen Regelstrategie ist eine möglichst schnelle Antwort auf einen geforderten Drehmomentsollwertsprung zu erzielen. Gleichzeitig soll der Luftmassenverbrauch möglichst klein gehalten werden. Der Drehmomentsollwertsprung kann beispielsweise von einem Kraftfahrzeugfahrer oder im Falle eines Hybridfahrzeuges von einem Steuergerät kommen.

Für eine Minimierung der Reaktionszeit auf einen Drehmomentsollwertsprung der Brennkraftmaschine bei minimalem Luftverbrauch stehen somit folgende Aktuatoren mit Steuersignalen zur Verfügung:

| Aktuator: | Steuersignal: |
|---|---|
| 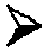 Drosselklappe 9, | u_{dk} |
| 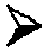 Lufteinblaseventil 12, | u_{bv} |
| 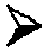 u. U. Überströmventil 7, | uᵤₛᵥ |
| 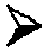 Zündwinkel, | u_{zw} |

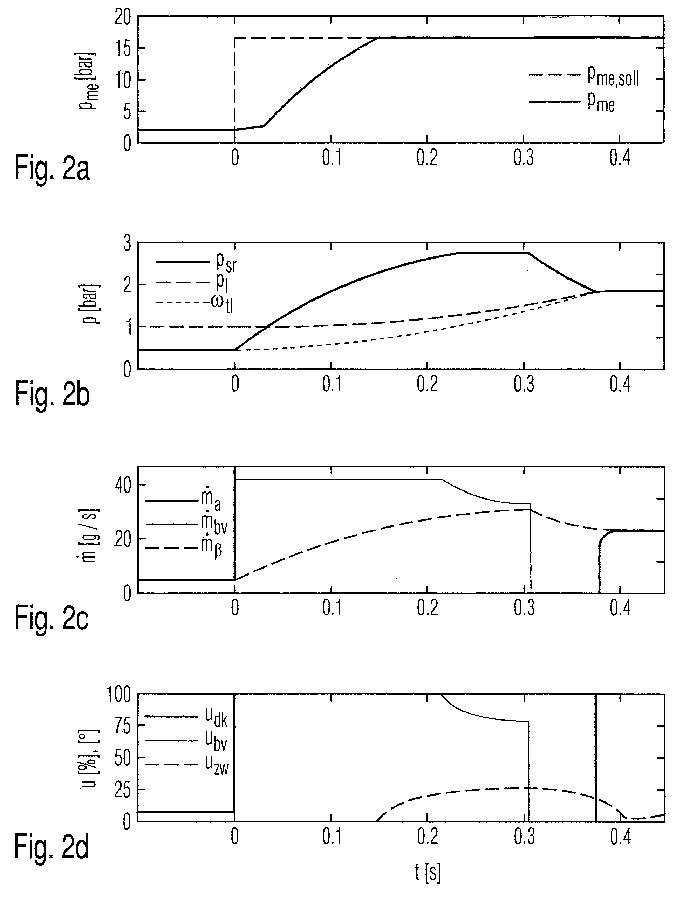

Für die indirekte Lufteinblasung zur Eliminierung des Turbolochs wurden bereits Regelstrateglen, wie bereits oben erwähnt, entwickelt. Die hier präsentierte erfindungsgemäße Regelstrategie führt jedoch zu einem deutlich niedrigeren Luftbedarf. Die Fig. 2a bis 2d zeigen die in Simulationen ermittelten Verläufe der wichtigsten Größen bei einer Turbolochüberbrückung mittels erfindungsgemäßer, indirekter Lufteinblasung.

In Fig. 2a sind in einem ersten Diagramm die Soll- und Istwerte des Mitteldrucks der Brennkraftmaschine 1 bei einem Drehmomentsollwertsprung dargestellt.

In Fig. 2b sind in einem zweiten Diagramm der Ladedruck pₗ (Druck nach dem Verdichter), der Saugrohrdruck pₛᵣ und die skalierte Turboladerdrehzahl ωₜₗ der Brennkraftmaschine 1 bei einem Drehmomentsollwertsprung gezeigt dargestellt.

In Fig. 2c sind die Massenströme durch das Lufteinblaseventil 12 m_{bv}, durch die Drosselklappe 9 m_{dk} und in die Brennkraftmaschine 1 m_{β} bei einem Drehmomentsollwertsprung dargestellt.

In Fig. 2d sind die Aktuatorsignale der Drosselklappe 9 u_{dk}, des Lufteinblaseventils 12 u_{bv} und des Zündwinkels u_{zw}.

In der erfindungsgemäßen Regelstrategie wird das Saugrohr (Bereich zwischen Drosselklappe 9 und den Gaswechseleinlassventilen) bewusst überfüllt, um einen größeren Luft-Massenstrom als nötig durch die Brennkraftmaschine 1 zu erzielen. Um trotzdem das gewünschte Drehmoment zu erreichen, wird der Zündwinkel nach spät verschoben. Der Vorteil dieser Strategie liegt in der erhöhten Abgasenthalpie, welche eine Erhöhung der Abgasturboladerbeschleunigung zur Folge hat. Dadurch kann die Dauer der Lufteinblasung verkürzt werden. Im Detail lautet die erfindungsgemäße Regelstrategie beim gewünschten Drehmomentsollwertsprung wie folgt:
1. Drosselklappe 9 und Lufteinblaseventil 12 voll auf:
   Um einen möglichst schnellen Drehmomentaufbau der Brennkraftmaschine 1 zu erzielen, muss der Saugrohrdruck pₛᵣ schnellstmöglich erhöht werden. Durch Öffnen des Lufteinblaseventils 12 und der Drosselklappe 9 kann dies erreicht werden;
2. Sobald der Saugrohrdruck pₛᵣ größer ist als der Ladedruck pₗ, Drosselklappe schließen:
   Sobald der Saugrohrdruck pₛᵣ größer ist als der Ladedruck pₗ, wird die Drosselklappe 9 sofort geschlossen um den Verlust von Luft in den Ansaugtrakt sowie ein Pumpen des Verdichters 5 (Compressor Surge) zu verhindern, das aufgrund des Zurückströmens der eingeblasenen Luft vom Saugrohr via Drosselklappe 9 zum Verdichter 5 auftreten würde.
3. Sobald der Massenstrom durch die Brennkraftmaschine 1 m_{β} größer ist als der gewünschte Massenstrom durch die Brennkraftmaschine 1 m_{β,soll}, Zündwinkel nach spät verschieben:
   Um trotz des großen Massenstroms das gewünschte Drehmoment zu erhalten, wird der Zündwinkel nach spät verschoben. Die Variable m_{β,soll} entspricht dem Massenstrom, welcher nötig ist, um das gewünschte Drehmoment p_{me, soll} ohne Zündwinkelverstellung zu erreichen. In den

Fig. 2a bis 2d geschieht dies bei t ≈ 0,15 Sekunden.
4. Wenn nötig: Sobald Verdichter 5 an der Pumpgrenze ist, Öffnen des Überströmventils 7:
   Ist das Druckverhältnis über dem Verdichter 5 für den vorliegenden Verdichtermassenstrom nahe der Pumpgrenze, wird das Überströmventil 7 geöffnet, um ein Pumpen des Verdichters 5 zu verhindern. Der dadurch verursachte Luftmassenabfluss führt zu einer Reduktion des Druckverhältnisses über den Verdichter 5. Der Massenabfluss wird mittels des Überströmventils 7 so geregelt, dass das Druckverhältnis leicht unter der Pumpgrenze zum Liegen kommt. Der Betriebspunkt des Verdichters 5 bewegt sich folglich entlang der Pumpgrenze.

Im Lastsprung in den Fig. 2a bis 2d wird das Überströmventil 7 nicht benötigt. Deshalb ist dessen Verlauf nicht gezeigt.
5. Sobald der Massenstrom durch die Brennkraftmaschine
   m_{β} = m_{β,soll} / e_{zw, min}, Lufteinblaseventil 12 langsam schließen:
   Das Saugrohr soll zwar überfüllt werden, jedoch sollte der Massenstrom m_{β} den Wert m_{β, max} = m_{β,soll} / e_{zw, min} nicht überschreiten, da sonst das gewünschte Drehmoment durch Zündwinkelverstellung allein nicht mehr erreicht werden kann. Um dies zu erreichen wird der Zufluss durch das Lufteinblaseventil 12 in das Saugrohr gedrosselt. In Fig. 2a geschieht dies bei t ≈ 0,21 Sekunden. Die Variable e_{zw, min} bezeichnet die Reduktion der thermodynamischen Effizienz, welche durch die Verstellung des Zündwinkels maximal erreicht werden kann. Ihr Wert wurde in dem dargestellten Ausführungsbeispiel gleich e_{zw, min} = 0,66 gewählt.
6. Sobald die Drehzahl des Abgasturboladers 2 ωₜₗ größer als 0,9 x ωₜₗₛₒₗₗ ist, Lufteinblaseventil 12 vollständig schließen:
   Sobald der Abgasturbolader 2 nahe der Solldrehzahl ist, wird das Lufteinblaseventil 12 geschlossen. Anschließend wird das Saugrohr geleert.
7. Sobald der Saugrohrdruck pₛᵣ gleich dem Ladedruck pₗ ist, Drosselklappe öffnen:
   Sobald sich der Saugrohrdruck pₛᵣ auf das Niveau des Ladedrucks pₗ abgesenkt hat, wird die Drosselklappe 9 wieder geöffnet.

Der in den Fig. 2a bis 2d dargestellte Mitteldruckaufbau erfolgt äußerst schnell. In nur 132 Millisekunden sind 90 % des Sollmitteldrucks p_{me,soll} erreicht. Um den Mitteldruckanstieg langsam zu gestalten, eignet sich die Verschiebung des Zündwinkels nach spät. Die Abgasenthalpie wird dadurch zusätzlich erhöht, was zu einer Reduktion des Luftbedarfs führt.

Das erfindungsgemäße Betriebsverfahren für eine gattungsgemäße Brennkraftmaschine 1 dient somit in vorteilhafter Weise zur Minimierung einer Reaktionszeit auf einen Drehmomentsollwertsprung einer Brennkraftmaschine 1 bei minimalem Druckluftverbrauch.

### Bezugszeichenliste:

- 1.: Brennkraftmaschine
- 2.: Abgasturbolader
- 3.: Turbine
- 4.: Abgasstrang
- 5.: Verdichter
- 6.: Frischlufttrakt
- 7.: Überströmventil
- 8.: Verdichterbypass
- 9.: Drosselklappe
- 10.: Drucklufteinblasevorrichtung
- 11.: Drucktank
- 12.: Lufteinblaseventil
- 13.: Steuereinheit
- 14.: erste Gas-Druckmessstelle
- 15.: zweite Gas-Druckmessstelle
- 16.: Turbinenbypass
- 17.: drittes Verschlusselement
- 18.: Abgasreinigungsanlage
- 19.: Kraftstoffsystem
- 20.: Ladeluftkühler
- p₁: erster Gasdruck
- p₂: zweiter Gasdruck
- pₛᵣ: Saugrohrdruck
- pₗ: Ladedruck
- pₘₑ: effektiver Mitteldruck
- p_{me,soll}: gewünschter Mitteldruck (gewünschtes Drehmoment)
- ṁ_{α}: (Bezifferung in Fig. 2c), identisch mit ṁ_{dk}
- ṁ_{ß}: Massenstrom durch die Brennkraftmaschine
- ṁ_{ß,soll}: gewünschter Massenstrom durch die Brennkraftmaschine
- ṁ_{bv}: Massenstrom durch Lufteinblaseventil
- ṁ_{dk}: Massenstrom durch Drosselklappe
- u_{dk}: Steuersignal Drosselklappe
- u_{bv}: Steuersignal Lufteinblaseventil
- u_{zw}: Steuersignal Zündwinkelverzug
- ωₜₗ: Abgasturbolader-Drehzahl
- ω_{tl, soll}: Soll Abgasturbolader-Drehzahl
- e_{zw,min}: maximale Reduktion der thermodynamischen Effizienz durch Zündwinkelverstellung

## Patentansprüche

1. Verfahren zum Betrieb einer Brennkraftmaschine (1) mit einer Steuereinheit (13) und mit einem Abgasturbolader (2) mit einer Turbine (3), angeordnet in einem Abgasstrang (4) für ein Abgas der Brennkraftmaschine (1) und einem Verdichter (5), angeordnet in einem Frischlufttrakt (6) für eine Frischluft für die Brennkraftmaschine (1), wobei in Strömungsrichtung der Frischluft nach dem Verdichter (5) und vor der Brennkraftmaschine (1) eine Drosselklappe (9) vorgesehen ist, sowie mit einer Drucklufteinblasevorrichtung (10), bestehend aus zumindest einen Drucktank (11) und ein mit dem Drucktank (11) Gas führend verbundenes und von der Steuereinheit (13) öffenbares und schließbares Lufteinblaseventil (12) umfasst zur Einbringung von Druckluft in den Frischlufttrakt (6) zwischen der Drosselklappe (9) und der Brennkraftmaschine (1), wobei im Frischlufttrakt (6) ein erster Gasdruck p₁ zwischen dem Verdichter (5) und der Drosselklappe (9) und ein zweiter Gasdruck p₂ zwischen der Drosselklappe (9) und der Brennkraftmaschine (1) gemessen wird und wobei die Drosselklappe (9) über die Steuereinheit (13) steuer- oder regelbar ist, wobei ein Kraftstoffsystem (19) vorgesehen ist,
wobei die Brennkraftmaschine (1) fremdgezündet ist und eine Zündwinkelverstellung über die Steuereinheit (13) erfolgt,
mit folgenden Verfahrensschritten zur Minimierung einer Reaktionszeit auf einen Drehmomentsollwertsprung der Brennkraftmaschine (1) bei minimalem Druckluftverbrauch:
- Erhöhung der Drehmomentanforderung an die Brennkraftmaschine (1),
- Öffnen des Lufteinblaseventils (12) und ständiges Messen des ersten und des zweiten Gasdrucks p₁, p₂ durch die Steuereinheit (13),
- Schließen der Drosselklappe (9) durch die Steuereinheit (13) frühestens mit Öffnen des Lufteinblaseventils (12) oder sobald der zweite Druck p₂ den ersten Druck p₁ übersteigt,
- Berechnen eines ersten Gas-Massenstroms, der in die Brennkraftmaschine (1) gefördert wird und Berechnen eines zweiten Gas-Massenstroms, der dem gewünschten Drehmoment entspricht durch die Steuereinheit (13),
- Sobald der erste Gas-Massenstrom größer ist als der zweite Gas-Massenstrom, Verschieben eines Zündwinkels nach spät,
- Sobald der erste Gas-Massenstrom multipliziert mit einem Faktor e_{zw,min} dem zweiten Gas-Massenstrom gleicht, langsames Schließen des Lufteinblaseventils (12),
- Sobald der Abgasturbolader (2) eine definierte Drehzahl erreicht, vollständiges Schließen des Lufteinblaseventils (12),
- Sobald der erste Gasdruck p₁ dem zweiten Gasdruck p₂ gleicht, Öffnen der Drosselklappe (9) durch die Steuereinheit (13),
- Ständiges Steuern oder Regeln des Kraftstoffsystems (19) durch die Steuereinheit (13) derart, dass ständig ein nahe-stöchiometrisches Kraftstoff-/Luftverhältnis der Brennkraftmaschine (1) für eine Verbrennung zur Verfügung steht,
- Konventionelles Betreiben der Brennkraftmaschine (1).

2. Verfahren nach Patentanspruch 1, wobei in dem Frischlufttrakt für den Verdichter ein mit einem Überströmventil verschließbarer Verdichterbypass zur Umgehung des Verdichters vorgesehen ist,
**gekennzeichnet durch** folgenden Verfahrensschritt:
- Sobald der Verdichter (5) eine Pumpgrenze erreicht, Öffnen des Überströmventiles (7) **durch** die Steuereinheit (13).

3. Verfahren nach Patentanspruch 2,
**gekennzeichnet durch** folgenden Verfahrensschritt:
- Regelung oder Steuerung des Überströmventiles (7) **durch** die Steuereinheit (13) derart, dass der Verdichter (5) die Pumpgrenze nicht überschreitet.

## Claims

1. A method for operating an internal combustion engine (1) having a control unit (13) and an exhaust gas turbocharger (2) with a turbine (3), arranged in an exhaust tract (4) for an exhaust gas of the internal combustion engine (1), and having a compressor (5), arranged in a fresh air tract (6) for fresh air for the internal combustion engine (1), wherein a throttle valve (9) is provided in the direction of flow of the fresh air downstream of the compressor (5) and upstream of the internal combustion engine (1), and also having a compressed air injection device (10), comprising at least one pressure tank (11) and an air injection valve (12) which can be opened and closed by the control unit (13) and is connected in a gas-conveying manner to the pressure tank (11) for introducing compressed air into the fresh air tract (6) between the throttle valve (9) and the internal combustion engine (1), wherein a first gas pressure p₁ is measured between the compressor (5) and the throttle valve (9) and a second gas pressure p₂ is measured between the throttle valve (9) and the internal combustion engine (1) in the fresh air tract (6) and wherein the throttle valve (9) can be controlled or regulated by the control unit (13),
wherein a fuel system (19) is provided, wherein the internal combustion engine (1) is spark-ignited and an ignition angle is adjusted by the control unit (13), with the following method steps for minimising a reaction time to a torque setpoint jump of the internal combustion engine (1) with a minimum consumption of compressed air:
- increasing the torque demand on the internal combustion engine (1),
- opening the air injection valve (12) and constantly measuring the first and second gas pressures p₁, p₂ by the control unit (13),
- closing the throttle valve (9) by the control unit (13) at the earliest with the opening of the air injection valve (12) or as soon as the second pressure p₂ exceeds the first pressure p₁,
- calculating a first gas mass flow which is conveyed in the internal combustion engine (1) and calculating a second gas mass flow which corresponds to the desired torque by the control unit (13),
- as soon as the first gas mass flow is greater than the second gas mass flow, retarding an ignition angle,
- as soon as the first gas mass flow, multiplied by a factor e_{zw,min}, equals the second gas mass flow, slowly closing the air injection valve (12),
- as soon as the exhaust gas turbocharger (2) reaches a defined speed, fully closing the air injection valve (12),
- as soon as the first gas pressure p₁ equals the second gas pressure p₂, opening the throttle valve (9) by the control unit (13),
- continuously controlling or regulating the fuel system (19) by the control unit (13) such that a near-stoichiometric fuel/air ratio of the internal combustion engine (1) is available for combustion,
- conventional operation of the internal combustion engine (1).

2. A method according to claim 1, wherein provided in the fresh air tract for the compressor is a compressor bypass, which can be closed by an overflow valve, for bypassing the compressor, **characterised by** the following method step:
- as soon as the compressor (5) reaches a surge line, opening the overflow valve (7) by the control unit (13).

3. A method according to claim 2, **characterised by** the following method step:
- regulating or controlling the overflow valve (7) by the control unit (13) such that the compressor (5) does not exceed the surge line.

## Revendications

1. Procédé de gestion d'un moteur à combustion interne (1) ayant une unité de commande (13) et un turbocompresseur de gaz d'échappement (2) muni d'une turbine (3), installée dans la conduite des gaz d'échappement (4) pour les gaz d'échappement du moteur à combustion interne (1) et un compresseur (5) installé dans la conduite d'air frais (6) alimentant le moteur à combustion interne (1) en air frais,
* et dans la direction de passage de l'air frais, en aval du compresseur (5) et en amont du moteur à combustion interne (1) il est prévu un volet d'étranglement (9) ainsi qu'un dispositif d'introduction d'air comprimé (10) composé d'au moins un réservoir de pression (11) et d'une soupape d'introduction d'air (12) reliée au réservoir de pression (11) pour le passage du gaz, en étant commandée par l'unité de commande (13), pour introduire de l'air comprimé dans la conduite d'air frais (6) entre le volet d'étranglement (9) et le moteur à combustion interne (1),
* et dans la conduite d'air frais (6) on mesure une première pression de gaz p₁ entre le compresseur (5) et le volet d'étranglement (9) et une seconde pression de gaz p₂ entre le volet d'étranglement (9) et le moteur à combustion interne (1), et
* le volet d'étranglement (9) est commandé ou réglé par l'unité de commande (13),
* un système de carburant (19) étant prévu,
* le moteur à combustion interne (1) étant un moteur à allumage commandé et le réglage de l'angle d'allumage est fait par l'unité de commande (13) selon les étapes de procédé suivantes pour minimiser le temps de réaction à un saut de la valeur de consigne du couple du moteur à combustion interne (1) pour une consommation minimale d'air comprimé :
- augmenter la demande de couple au moteur à combustion interne (1),
- ouvrir la soupape d'introduction d'air (12) et mesurer en permanence la première et la seconde pressions de gaz p₁, p₂ par l'unité de commande (13),
- fermer le volet d'étranglement (9) par l'unité de commande (13) au plus tôt avec l'ouverture de la soupape d'introduction d'air (12) et dès que la seconde pression p₂ de passe la première pression p₁,
- calculer un premier débit massique de gaz transféré au moteur à combustion interne (1) et calculer le second débit massique de gaz qui correspond au couple souhaité par l'unité de commande (13),
- dès que le premier débit massique de gaz est supérieur au second débit massique de gaz, décaler l'angle d'allumage dans le sens du retard,
- dès que le premier débit massique de gaz multiplié par un coefficient e_{zw,min} est égal au débit massique de gaz, fermer lentement la soupape d'introduction d'air (12),
- dès que le turbocompresseur de gaz d'échappement (2) atteint une vitesse de rotation définie, fermer complètement la soupape d'introduction d'air (12),
- dès que la première pression de gaz p₁ est égale à la seconde pression de gaz p₂, ouvrir le volet d'étranglement (9) par l'unité de commande (13),
- commander ou réguler en permanence le système de carburant (19) par l'unité de commande (13) pour avoir en permanence un rapport carburant / air proche du rapport stoechiométrique dans le moteur à combustion interne (1) pour la combustion,
- gérer de manière conventionnelle le moteur à combustion interne (1).

2. Procédé selon la revendication 1,
**caractérisé en ce que**
la conduite d'air frais du compresseur ayant une dérivation de compresseur se fermant par une soupape de dérivation pour contourner le compresseur,
procédé **caractérisé en ce que**
- dès que le compresseur (5) atteint une limite de pompe, ouvrir la soupape de dérivation (7) par l'unité de commande (13).

3. Procédé selon la revendication 2,
**caractérisé par**
l'étape de procédé suivante :
- régler ou commander la soupape de dérivation (7) à l'aide de l'unité de commande (13) pour que le compresseur (5) ne dépasse jamais la limite de pompe.
